# EUROPÄISCHE PATENTSCHRIFT

(11) **EP 3 987 310 B1**
(45) Veröffentlichungstag und Bekanntmachung des Hinweises auf die Patenterteilung: **05.11.2025**
(21) Anmeldenummer: 20735475.4
(22) Anmeldetag: 17.06.2020
(51) Int. Cl.: G01S 19/45

(54) **FEHLER- UND INTEGRITÄTSBEWERTUNG DURCH BEWEGUNGSPRÄDIKATION**
ERROR AND INTEGRITY ASSESSMENT THROUGH MOVEMENT PREDICTION
L'ÉVALUATION DES ERREURS ET DE L'INTÉGRITÉ PAR LA PRÉDICTION DES MOUVEMENTS

(30) Priorität: 18.06.2019 DE 102019208874
(43) Veröffentlichungstag der Anmeldung: 27.04.2022
(73) Patentinhaber: Continental Automotive Technologies GmbH, 30175 Hannover (DE)
(72) Erfinder: KUBINA, Bernd, 90411 Nürnberg (DE); BURGHARDT, Roland, 90411 Nürnberg (DE); BODENHEIMER, Robert, 90411 Nürnberg (DE)
(74) Vertreter: Schlosser, Martin
(86) Internationale Anmeldenummer: PCT/DE2020/200048
(87) Internationale Veröffentlichungsnummer: WO 2020/253922

(56) Entgegenhaltungen:
- DE-A1- 102013 016 243
- US-A1- 2008 117 100
- US-A1- 2011 235 686

## Beschreibung

Die Erfindung betrifft ein Verfahren zur Fehler- und Integritätsbewertung bei einer Positionsbestimmung sowie eine Steuervorrichtung und ein Computerprogrammprodukt zur Durchführung des Verfahrens.

Die absolute Geoposition eines Fahrzeuges kann heutzutage mit Hilfe von Empfängern für Globale Satellitennavigationssysteme (GNSS), bestimmt werden, nachfolgend auch als GNSS-Messung bezeichnet. Zusätzlich kann die relative Bewegung eines Fahrzeugs beispielsweise mit Hilfe von im Fahrzeug verbauter Inertial (IMU)- und Odometrie (ODO)-Sensorik bestimmt werden.

Das GNSS-System ermöglicht zum Ersten die Messung der Empfänger Position über Laufzeitmessungen, auch Code Ranging genannt. Zum Zweiten ermöglicht es die Messung der Empfängergeschwindigkeit über Doppler-Verschiebungen.

Im Rahmen einer Sensorfusion können GNSS-, IMU- und ODO-Messungen fusioniert werden, um präzisere und höher verfügbare Positionsbestimmungen zu erhalten. Die Sensorfusion wird üblicherweise mit Kalman- oder Partikel-Filtern realisiert.

Zur Fehlerdetektion in GNSS-Messungen existieren die bekannten Methoden des Receiver Autonomous Integrity Monitoring (RAIM) und die Fault Detection and Exclusion (FDE). Dabei wird die Tatsache genutzt, dass während einer GNSS-Messung in der Regel mehr als die notwendigen vier Satellitensignale verfügbar sind. Bei der Fault Detection and Exclusion müssen mindestens sechs Satelliten verfügbar sein. Weiterhin existieren die Methode des Code-Minus-Carrier und der Double-Delta Korrelator zur Detektion von GNSS-Mehrwegeausbreitung.

Grundsätzlich treten bei GNSS-Messungen im Fahrzeug sporadische Fehler auf, die mit dem aktuellen Stand der Technik nicht erkannt werden. Dies begrenzt das Vertrauensniveau und damit die Integrität der mittels GNSS ermittelten Positionierung.

Bei der Positionsbestimmung, die nachfolgend sowohl im Sinne einer Lokalisierung als auch im Sinne von Geschwindigkeits- oder Beschleunigungsbestimmung zu verstehen ist, finden sich langsam und schnell veränderliche Fehler. Zu den Ursachen von schnell veränderlichen Messfehlern zählen in erster Linie sogenannte Non-Line-of-Sight (NLOS) Ausbreitungspfade des Funksignals, insbesondere bei bewegten Empfängern, im Weiteren aber auch Fehler im GNSS-Satelliten, wie zufällige Hardware- und Softwarefehler, beispielsweise außergewöhnlich schnelle Uhrendrifte.

Die genannten NLOS-Signale entstehen durch Reflektion und Streuung des Funksignals im direkten Umfeld des Empfängers, wie bspw. Gebäuden. Es lassen sich hier verschiedene Überlagerungsmöglichkeiten von unerwünschten NLOS und dem gewünschten direkten Line-of-Sight (LOS) Signal unterscheiden. Ein Großteil dieser Überlagerungsmöglichkeiten wird durch den Begriff Mehrwegeausbreitung beschrieben.

Bei fusionierten Filtermethoden können Fehler in den jeweils beteiligten Sensoren zu einer fehlerhaften Positionsbestimmung führen. Hier sind neben den NLOS-Signalen des GNSS, Drift und Offset in der Inertialsensorik, und Offsets in der Odometrie als mögliche Fehlerursachen zu nennen. Insbesondere Kalman-Filterlösungen zeigen die unerwünschte zeitliche Fehlerfortpflanzung.

Die oben genannten GNSS-Fehlerdetektoren RAIM und FDE sind grundsätzlich auf eine isolierte Betrachtung der GNSS Signale beschränkt, was die Detektion von gleichartigen Fehlern (Common Mode Failure) einschränkt. Weiterhin zeigen RAIM und FDE Detektionsschwächen, wenn mehrere Satelliten gleichzeitig gestört sind.

Die US 2011 235 686 A1 betrifft eine Positionsschätzvorrichtung, die an einem mobilen Objekt angebracht ist, und eine Trajektorie des mobilen Objekts durch Integrieren von Geschwindigkeitsvektoren des mobilen Objekts berechnet, welche anhand von Daten eines Satellitennavigationssystems bestimmt werden, wobei eine Position des mobilen Objekts durch Verschieben der berechneten Trajektorie in der Weise geschätzt wird, dass ein für die Trajektorie bestimmter Evaluierungswert der Summe der Differenzen zwischen Entfernungen zwischen mehreren Punkten zu unterschiedlichen Zeiten auf der Trajektorie und jeweiligen Satelliten des Satellitennavigationssystems und der erfassten Pseudostrecken der Satelliten zu dem beweglichen Objekt ein Minimum ist.

Der Erfindung liegt daher die Aufgabe zu Grunde, bei einer Positionsbestimmung eine verbesserte Fehler- und Integritätsbewertung zu erreichen. Dabei soll vorzugsweise auch erreicht werden, dass schnell veränderliche Fehler in der GNSS-Messung, insbesondere versursacht durch Mehrwegeausbreitung, und / oder durch Fehler in Messungen der Inertialsensorik bzw. der Odometrie, detektiert werden und die Integrität der ermittelten Fahrzeug-Position damit erhöht wird.

Die Aufgabe wird durch die Merkmale der unabhängigen Ansprüche gelöst. Bevorzugte Weiterbildungen sind Gegenstand der abhängigen Ansprüche. Durch ausdrückliche Bezugnahme werden die Ansprüche an dieser Stelle zum Inhalt der Beschreibung gemacht.

Gemäß einem Aspekt der Erfindung umfasst ein Verfahren zur Fehler- und Integritätsbewertung bei einer Positionsbestimmung das Aufnehmen von Positionswerten und Berechnen von Uhrenfehlern eines Empfängers durch zeitdiskrete Laufzeit-Messungen mittels eines Satellitennavigationssystems. Die Positionswerte umfassen vorzugsweise für jede der einzelnen Messungen eine Positionsangabe in einem dreidimensionalen Koordinatensystem, die durch Messung der Laufzeit des GNSS-Signals und Multiplikation mit der Lichtgeschwindigkeit ermittelt wird. Die Historie der Positionswerte wird vorzugsweise gespeichert, so dass sie für spätere Verfahrensschritte zur Verfügung steht.

Unter einer Laufzeit-Messung, oft auch als Code Ranging oder Pseudorange bezeichnet, wird vorzugsweise verstanden, dass die Zeitdifferenz gemessen wird, die zwischen dem Aussenden eines GNSS-Signals vom Phasenzentrum der Satellitenantenne bis zum Empfangen des Signals im Phasenzentrum der Empfängerantenne vergeht. Durch Multiplikation mit der Lichtgeschwindigkeit ergibt sich der Abstand zwischen beiden, der allerdings durch fehlende Synchronisation der Uhren von Satelliten und Empfänger eine große Ungenauigkeit aufweist. Das GNSS-Signal umfasst neben dem Trägersignal und den Ephemeridendaten des Satelliten einen Code, der auch im Empfänger enthalten ist und den der Empfänger sozusagen soweit verschiebt, dass er mit dem empfangenen Code des Satelliten synchronisiert ist. Diese Verschiebung entspricht der gemessenen Laufzeit.

Eine Pseudoentfernung bezeichnet allgemein die Distanz, die sich zwischen einem Satelliten und einem Empfänger aus einer Messung ergibt, wenn dabei entscheidende Ungenauigkeitsfaktoren mit enthalten sind. Aufgrund des großen Werts der Lichtgeschwindigkeit führen bei einer Laufzeit-Messung schon kleine Uhrenfehler zu großen Abweichungen, was auch für die durch zeitdiskrete Laufzeit-Messungen aufgenommenen Positionswerte gilt. Mathematisch lässt sich eine Pseudoentfernung PR für einen Zeitpunkt i durch PR_i = r_i + e_RecClock_i + e_other_i + e_MP_i beschreiben, wobei r_i die tatsächliche Distanz zwischen Satellit und Empfänger, e_RecClock_i den Empfängeruhrenfehler, e_other_i weitere Fehler, wie Ionosphären-, Rausch- und Satellitenuhrenfehler und e_MP_i schnell veränderliche Fehler, wie Multipath bzw. NLOS-Fehler, jeweils zum Zeitpunkt i, beschreiben. Der Fehler e_RecClock wird im Empfänger nach jeder Pseudorange-Messung mathematisch berechnet bzw. geschätzt. Die Fehlerterme können sowohl positive als auch negative Werte annehmen.

Ein weiterer Schritt des erfindungsgemäßen Verfahrens beinhaltet das Aufnehmen einer ersten Pseudoentfernung zu einem späteren, vorzugsweise dem aktuellen, Zeitpunkt durch zeitdiskrete Laufzeit-Messung mittels des Satellitennavigationssystems. Der Uhrenfehler lässt sich beispielsweise in bekannter Weise ermitteln, sofern vier GNSS-Satelliten verfügbar sind. Uhrenfehler werden vorzugsweise in eine Entfernung umgerechnet, die sich aus der Multiplikation der dem Uhrenfehler entsprechenden Zeitdifferenz mit der Lichtgeschwindigkeit ergibt. Mit der ersten Pseudoentfernung steht eine durch Messung erhaltene Vergleichsgröße bereit.

Um einen Vergleich zu ermöglichen, wird eine prädizierte Größe, die zweite Pseudoentfernung, bereitgestellt. Dazu wird ein Positionswert des Empfängers, der dem späteren Zeitpunkt zugeordnet ist, basierend auf einer Trajektorie extrapoliert, also die Trajektorie für einen Zeitschritt logisch fortgeführt. Die Trajektorie gibt den vorhergehenden Bewegungspfad des Empfängers kontinuierlich oder für diskrete Zeitpunkte wieder. Zusätzlich wird auch der Uhrenfehler für den späteren Zeitpunkt anhand des bisherigen Verlaufs der Uhrenfehler extrapoliert. Dies erfolgt basierend auf einer Anzahl der vor dem späteren Zeitpunkt berechneten Uhrenfehler, wobei die Anzahl variabel oder einmalig festgelegt worden sein kann.

Weiterhin beinhaltet das Verfahren das Ermitteln einer Entfernung zwischen dem extrapolierten Positionswert des Empfängers und der Position eines Satelliten des Satellitennavigationssystems zu dem späteren Zeitpunkt. Grundlage für den extrapolierten Positionswert bilden, wie zuvor erläutert, die durch zeitdiskrete Laufzeit-Messungen aufgenommenen Positionswerte. Der extrapolierte Positionswert, also der dem späteren Zeitpunkt zugeordnete geschätzte Positionswert, bildet somit das eine Ende einer tatsächlichen Entfernung, deren anderes Ende durch den Satellit gebildet wird, dessen Position beispielsweise aus den übermittelten Ephemeridendaten bekannt ist. Bei dem Satellit handelt es sich um einen vorzugsweise beliebig ausgewählten Satelliten aus den im Sinne einer direkten Signalübertragung verfügbaren Satelliten.

Um aus der Entfernung zwischen dem extrapolierten Positionswert des Empfängers und der Position des Satelliten eine Vergleichsgröße für die erste Pseudoentfernung zu erhalten, wird der extrapolierte Uhrenfehler, also der dem späteren Zeitpunkt zugeordnete geschätzte Uhrenfehler, zu der ermittelten Entfernung addiert. Dabei wird sinnvollerweise, wie vorstehend erläutert, der extrapolierte Uhrenfehler als Entfernung ausgedrückt. Die so erhaltene zweite Pseudoentfernung wird dann mit der ersten Pseudoentfernung verglichen.

Mit anderen Worten wird bei dem erfindungsgemäßen Verfahren also ein Schätzwert bzw. eine Prädikation der Empfängerposition und des Uhrenfehlers des Empfängers gebildet und die zugehörige Pseudoentfernung berechnet. Diese prädizierte Pseudoentfernung wird mit der gemessenen Pseudoentfernung verglichen, um auf einfache, kostengünstige und effiziente Weise ein besseres Qualitätsmaß für Fehler und Integrität der Laufzeit-Messung des spezifischen Satelliten zu erhalten und insbesondere schnell veränderliche Fehler zu erkennen. Das Verfahren wird vorzugsweise für andere Satelliten des Satellitennavigationssystems wiederholt.

Anders als bei dem herkömmlichen FDE-Verfahren kann die Fehler- und Integritätsbewertung bei dem erfindungsgemäßen Verfahren vor dem Lösen des Positionsgleichungssystems erfolgen, bei dem die Position des Empfängers mit Hilfe der Daten mehrerer Satelliten berechnet wird, so dass sich ein geringerer Berechnungsaufwand ergibt.

Im Gegensatz zu der Methode des Code-Minus-Carrier ist die Fehler- und Integritätsbewertung unabhängig vom Fehlertyp des NLOS-Ausbreitungspfades, also beispielsweise Mehrwegeausbreitung die ausschließlich auftritt oder Mehrwegeausbreitung die zusätzlich zu einem direkten Signalpfad auftritt.

Bevorzugt handelt es sich bei dem Empfänger um ein Fahrzeug bzw. der Empfänger ist in einem Fahrzeug angeordnet oder fest verbaut.

Es ist bevorzugt, dass die Trajektorie durch eine Anzahl der vor dem späteren Zeitpunkt durch zeitdiskrete Laufzeit-Messungen mittels eines Satellitennavigationssystems aufgenommenen Positionswerte gebildet wird und / oder aus Daten von Umfelderfassungssensoren extrahiert wird, insbesondere Kamera, Radar und / oder Lidar. Die Nutzung von Umfelderfassungssensoren ist möglich, weil diese ausgehend von einer bekannten Absolutposition diese durch Erfassen der Bewegung fortschreiben können.

Vorzugsweise entspricht der spätere Zeitpunkt dem gegenwärtigen Zeitpunkt. Das Aufnehmen von Positionswerten und Berechnen von Uhrenfehlern des Empfängers wird demgegenüber zu früheren Zeitpunkten, also in der Vergangenheit vor dem späteren Zeitpunkt durchgeführt. Die Zeitpunkte sind vorzugsweise gleichmäßig beabstandet, d. h. die zeitdiskreten Laufzeit-Messungen als auch vorzugsweise der spätere Zeitpunkt sind jeweils vom vorhergehenden Zeitpunkt zeitlich gleich weit entfernt. Der spätere Zeitpunkt ist vorzugsweise also der einem bestimmten Takt folgende nächste Schritt nach einer Reihe von Mess-Zeitpunkten. Der Takt entspricht vorzugsweise der Abtastrate des Empfängers.

Nach einer bevorzugten Ausführungsform werden zum Extrapolieren des Positionswerts des Empfängers zu dem späteren Zeitpunkt eine Positionswertdifferenz aus den Positionswertdifferenzen der zuvor aufgenommenen Positionswerte abgeleitet. Es werden also die Änderungen von Positionswert zu Positionswert betrachtet, um daraus den Positionswert zum späteren Zeitpunkt abzuschätzen.

Es entspricht einer bevorzugten Ausführungsform, dass das Extrapolieren des Positionswerts des Empfängers zusätzlich auf einer Trägheitsmodellierung, Messungen von Inertialsensorik (IMU), Messungen von Odometriesensorik, und / oder Dopplermessungen der Satellitennavigation basiert. Inertialsensorik umfasst normalerweise Sensoren, die Beschleunigungen und Drehraten messen, während Odometrie durch Messung von Daten eines Vortriebssystems, wie beispielsweise Raddrehzahlen und / oder Lenkbewegungen, eine eigene Positionsbestimmung erlaubt.

Das Extrapolieren des Uhrenfehlers des Empfängers basiert nach einer bevorzugten Ausführungsform zusätzlich auf Temperaturmessungen, hinterlegten Informationen über einen Uhrendrift und / oder über das Uhrenquarz, so dass der Uhrenfehler noch genauer bestimmbar ist.

Es ist bevorzugt, dass das Extrapolieren des Uhrenfehlers des Empfängers, wie vorstehend bereits erläutert in Form eines Entfernungswerts erfolgt, der dem Uhrenfehler äquivalent ist.

Nach einer bevorzugten Ausführungsform des Verfahrens wird beim Ermitteln der Entfernung (r'₀) zwischen dem extrapolierten Positionswert (P'₀) des Empfängers und der Position des Satelliten (S₀) die Position des Satelliten aus den Ephemeridendaten dieses Satelliten ermittelt, die mit dem Satellitensignal übertragen werden.

Vorzugsweise umfasst das Vergleichen der zweiten Pseudoentfernung mit der ersten Pseudoentfernung eine Differenzbildung. Der Differenzbetrag kann als Variable gespeichert bzw. versendet werden oder vorzugsweise direkt als Ausgangspunkt weiterer Maßnahmen genutzt werden, mit denen auf die aktuell ermittelte Fehlerhaftigkeit bzw. Integrität der Laufzeit-Messung des Satelliten reagiert wird. Bei einem großen Differenzbetrag kann es beispielsweise sinnvoll sein, den Satelliten vorerst von der Bestimmung der Empfängerposition auszuschließen.

Es ist bevorzugt, dass relativ zu einem Referenzwert einem kleinen Differenzbetrag eine hohes Qualitätsmaß und einem großen Differenzbetrag ein kleines Qualitätsmaß zugeordnet wird und ein entsprechendes Qualitätsmaß festgelegt wird. Somit wird ein einheitliches Maß für die Qualität bereitgestellt.

Nach einer bevorzugten Ausführungsform erfolgt eine Überprüfung auf indirekt empfangene Signale, die beispielsweise durch Mehrwegeausbreitung hervorgerufen wurden, wobei eine relativ zu einem Referenzwert schnelle Änderung des Qualitätsmaßes als Indiz für einen indirekten Signalempfang gewertet wird.

Nach einem weiteren Aspekt der Erfindung ist eine Steuervorrichtung ausgebildet zur Durchführung eines Verfahrens, wie beschrieben.

Die Steuervorrichtung weist einen Empfänger für Satellitennavigation, einen Speicher und einen Prozessor auf, wobei das Verfahren in Form eines Computerprogramms in dem Speicher hinterlegt und der Prozessor zur Ausführung des Verfahrens ausgebildet ist, wenn das Computerprogramm aus dem Speicher in den Prozessor geladen ist.

Das Computerprogramm der Steuervorrichtung umfasst bevorzugt Programmcodemittel, um alle Schritte des Verfahrens durchzuführen, wenn das Computerprogramm auf einem Computer oder einer der zuvor genannten Vorrichtungen ausgeführt wird.

Nach einem weiteren Aspekt der Erfindung umfasst ein Computerprogrammprodukt einen Programmcode, der auf einem computerlesbaren Datenträger gespeichert ist und der, wenn er auf einer Datenverarbeitungseinrichtung mit Empfänger für Satellitennavigation ausgeführt wird, eines der angegebenen Verfahren durchführt.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung eines Ausführungsbeispiels im Zusammenhang mit der Zeichnung.

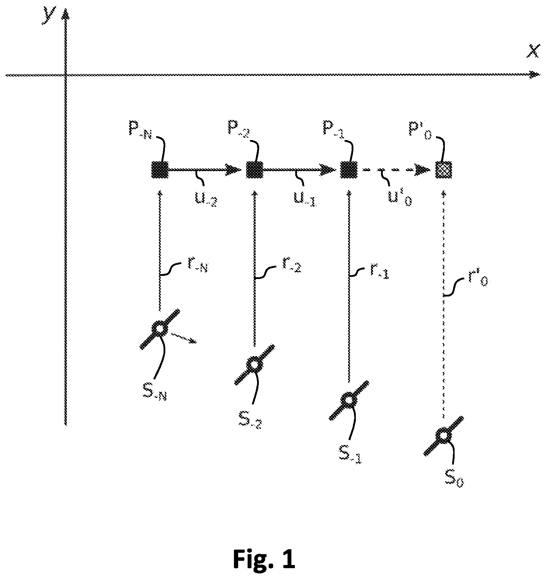

Die Fig. 1 zeigt in schematischer Darstellung eine zweidimensionale, entlang der Raumachsen X, Y aufgespannte, beispielhafte Darstellung der Bewegung eines Empfängers und eines Satelliten sowie deren Abstände zu bestimmten Zeitpunkten, wobei der Empfänger in einem Fahrzeug enthalten ist, dessen Bewegung mit der des Empfängers gleichgesetzt ist. Die Bezugszeichen enthalten jeweils einen Zeitindex i, wobei mit i der Abtastzeitpunkt bezeichnet wird. -N, -2 und -1 bezeichnen entsprechend Zeitpunkte der Vergangenheit, in denen Messungen durchgeführt wurden. Ein demgegenüber späterer Zeitpunkt entspricht der Gegenwart und wird mit i = 0 bezeichnet. Der gezeigte Satellit ist repräsentativ für einen beliebigen Satelliten und nimmt zu den verschiedenen Zeitpunkten i die Positionen S_{-N}, S₋₂, S₋₁, S₀ ein.

Die Positionswerte entsprechen der Empfängerposition, wobei P durch P_{-N}, P₋₂, P₋₁ beschrieben wird. Sie werden durch zeitdiskrete Laufzeit-Messungen mittels eines Satellitennavigationssystems, beispielsweise NAVSTAR GPS, Galileo, GLONASS oder Beidou erhalten. Die Vektoren u₋₁, u₋₂, entsprechend bis u_{-(N-1)}, beschreiben die Positionsänderungen, die jeweils die Differenz zwischen zwei Positionswerten darstellen. Von Positionsänderung zu Positionsänderung ändern sich im Ausführungsbeispiel auch die Entfernungen r_{-N}, r₋₂, r₋₁ zwischen Empfänger und Satellit. Auch für den späteren Zeitpunkt mit i = 0 wird der Positionswert P₀ und die Entfernung r₀ zum Satellit bestimmt, aus der durch Addition des aktuell gemessenen Uhrenfehlers Δt₀ eine erste Pseudoentfernung als gemessene Entfernung ermittelt wird.

Anhand der bisherigen Positionsänderungen wird, durch logische Fortführung, ein Schätzwert u'₀ für die Positionsänderung des folgenden, also aktuellen bzw. gegenwärtigen, Abtast-Zeitpunktes geschätzt. Somit wird mit Hilfe der Bewegungshistorie eine Schätzung, hier allgemein durch ein Apostroph gekennzeichnet, des aktuellen Positionswerts P'₀ des Empfängers erhalten. Dabei wurden als Zusatzinformationen eine Trägheitsmodellierung des Fahrzeugs, Messungen von Inertialsensorik, Messungen von Odometriesensorik, und Dopplermessungen der Satellitennavigation verwendet.

Auch für den Uhrenfehler des Empfängers, mit anderen Worten die Zeitdifferenz, mit der dessen Uhr von der Satellitenuhr abweicht, wird eine Schätzung durchgeführt. Dazu wird die Historie der letzten gemessenen Uhrenfehler herangezogen, um die entsprechende Zeitdifferenz Δt'₀ zu extrapolieren, die jedoch zur einfacheren Weiterberechnung als Distanzäquivalent ausgedrückt wird. Zusätzlich fließen in die Extrapolation hinterlegte Informationen zum Uhrendrift bzw. zum Uhrenquarz sowie Temperaturmessungen ein.

Weiter wird aus diesen geschätzten Informationen die tatsächliche Entfernung r'₀ zwischen dem Satellit und dem Empfänger berechnet, wobei der Begriff der tatsächlichen Entfernung so zu verstehen ist, dass diese Entfernung keine Uhren-, Ionosphären- oder sonstiger bei Satellitenmessung üblichen Fehler beinhaltet, was daran liegt, dass diese Entfernung als Distanz zwischen zwei Punkten berechnet wird. Durch Addition des ebenfalls geschätzten Uhrenfehlers Δt'₀ wird eine zweite Pseudoentfernung bereitgestellt. Zusätzlich zu dem Uhrenfehler Δt'₀ können zur Bildung der geschätzten, also der zweiten, Pseudoentfernung weitere Fehlergrößen addiert werden, um die konform mit der ersten Pseudoentfernung zu sein, die gegebenenfalls auch weitere Fehlergrößen, wie bspw. Ionosphärenfehler enthält. Der Differenzbetrag der ersten und zweiten Pseudoentfernung, sofern nur der Uhrenfehler Δt'₀ addiert wird also | (r'₀ + Δt'₀) - (r₀ + Δt₀) |, beinhaltet eine Information über gegebenenfalls vorhandene schnell veränderliche Fehler, bspw. durch Mehrwegeausbreitung des Satellitensignals verursacht, denn dadurch weicht die gemessene Entfernung sprunghaft von der durch Extrapolieren bzw. Schätzen gewonnenen Entfernung ab. Allgemein gibt die Höhe des Differenzbetrags umgekehrt die Integrität der Messung wieder, wobei dies über eine größere Anzahl von Zeitschritten umso besser funktioniert.

Somit ist die Größe des Differenzbetrags ein Qualitätsmaß für Fehler und Integrität der Laufzeit-Messung des spezifischen Satelliten. Bei einer mehrfachen Wiederholung des Verfahrens bzw. durch eine höhere Anzahl genutzter Zeitschritte bzw. Messungen für die Schätzung lässt sich eine höhere Aussagekraft erreichen, jedoch ist es grundsätzlich sinnvoll bezüglich der nötigen Rechenleistung einen Kompromiss zu suchen.

Das Verfahren bzw. eine entsprechende Steuervorrichtung kann in beliebigen Systemen eingesetzt werden, beispielsweise in Kraftfahrzeugen, Drohnen, Flugzeugen oder Schiffen.

## Patentansprüche

1. Verfahren zur Fehler- und Integritätsbewertung bei einer Positionsbestimmung, umfassend:
- Aufnehmen von Positionswerten (P_{-N}, P₋₂, P₋₁) und Berechnen von Uhrenfehlern eines Empfängers durch zeitdiskrete Laufzeit-Messungen mittels eines Satellitennavigationssystems,
- Aufnehmen einer ersten Pseudoentfernung zu einem späteren Zeitpunkt durch zeitdiskrete Laufzeit-Messung mittels des Satellitennavigationssystems,
- Extrapolieren eines Positionswerts (P'₀) des Empfängers zu dem späteren Zeitpunkt basierend auf einer Trajektorie, die den vorhergehenden Bewegungspfad des Empfängers wiedergibt und Extrapolieren eines Uhrenfehlers des Empfängers zu dem späteren Zeitpunkt basierend auf einer Anzahl der vor dem späteren Zeitpunkt berechneten Uhrenfehler,
- Ermitteln einer Entfernung (r'₀) zwischen dem extrapolierten Positionswert (P'₀) des Empfängers und der Position eines Satelliten (S₀) des Satellitennavigationssystems zu dem späteren Zeitpunkt,
wobei ein Qualitätsmaß für die Nutzbarkeit der Positionsbestimmung mit dem Satelliten gewonnen wird durch
- Bilden einer zweiten Pseudoentfernung auf Basis der Summe der ermittelten Entfernung (r'₀) und des extrapolierten Uhrenfehlers zu dem späteren Zeitpunkt und
- Vergleichen der zweiten Pseudoentfernung mit der ersten Pseudoentfernung.

2. Verfahren gemäß Anspruch 1, **dadurch gekennzeichnet, dass** die Trajektorie durch eine Anzahl der vor dem späteren Zeitpunkt aufgenommenen Positionswerte (P_{-N}, P₋₂, P₋₁) gebildet wird und / oder aus Daten von Umfelderfassungssensoren extrahiert wird, insbesondere Kamera, Radar und / oder Lidar.

3. Verfahren gemäß einem der vorhergehenden Ansprüche, **dadurch gekennzeichnet, dass** der spätere Zeitpunkt einem gegenwärtigen Zeitpunkt entspricht und das Aufnehmen von Positionswerten (P_{-N}, P₋₂, P₋₁) und Berechnen von Uhrenfehlern des Empfängers demgegenüber zu vergangenen, insbesondere gleichmäßig beabstandeten, Zeitpunkten durchgeführt wurde.

4. Verfahren gemäß einem der vorhergehenden Ansprüche, **dadurch gekennzeichnet, dass** zum Extrapolieren des Positionswerts (P'₀) des Empfängers zu dem späteren Zeitpunkt eine Positionswertdifferenz (u'₀) aus den Positionswertdifferenzen (u₋₁, u₋₂) der zuvor aufgenommenen Positionswerte (P_{-N}, P₋₂, P₋₁) abgeleitet wird.

5. Verfahren gemäß einem der vorhergehenden Ansprüche, **dadurch gekennzeichnet, dass** das Extrapolieren des Positionswerts (P'₀) des Empfängers zusätzlich auf einer Trägheitsmodellierung, Messungen von Inertialsensorik, Messungen von Odometriesensorik, und / oder Dopplermessungen der Satellitennavigation basiert.

6. Verfahren gemäß einem der vorhergehenden Ansprüche, **dadurch gekennzeichnet, dass** das Extrapolieren des Uhrenfehlers des Empfängers zusätzlich auf Temperaturmessungen, hinterlegten Informationen über einen Uhrendrift und / oder über das Uhrenquarz basiert.

7. Verfahren gemäß einem der vorhergehenden Ansprüche, **dadurch gekennzeichnet, dass** das Extrapolieren des Uhrenfehlers des Empfängers in Form eines Entfernungswerts erfolgt, der dem Uhrenfehler äquivalent ist.

8. Verfahren gemäß einem der vorhergehenden Ansprüche, **dadurch gekennzeichnet, dass** beim Ermitteln der Entfernung (r'₀) zwischen dem extrapolierten Positionswert (P'₀) des Empfängers und der Position des Satelliten (S₀) die Position (S₀) des Satelliten aus dessen Ephemeridendaten ermittelt wird, die mit dem Satellitensignal übertragen werden.

9. Verfahren gemäß einem der vorhergehenden Ansprüche, **dadurch gekennzeichnet, dass** das Vergleichen der zweiten Pseudoentfernung mit der ersten Pseudoentfernung eine Differenzbildung umfasst.

10. Verfahren gemäß Anspruch 9, **dadurch gekennzeichnet, dass** relativ zu einem Referenzwert einem kleinen Differenzbetrag eine hohes Qualitätsmaß und einem großen Differenzbetrag ein kleines Qualitätsmaß zugeordnet wird und ein entsprechendes Qualitätsmaß festgelegt wird.

11. Verfahren gemäß einem der Ansprüche 9 oder 10, **dadurch gekennzeichnet, dass** eine Überprüfung auf indirekt empfangene Signale erfolgt, wobei eine relativ zu einem Referenzwert schnelle Änderung des Qualitätsmaßes als Indiz für einen indirekten Signalempfang gewertet wird.

12. Steuervorrichtung, aufweisend einen Empfänger für Satellitennavigation, einen Speicher und einen Prozessor, wobei ein Verfahren nach einem der vorhergehenden Ansprüche in Form eines Computerprogramms in dem Speicher hinterlegt und der Prozessor zur Ausführung des Verfahrens ausgebildet ist, wenn das Computerprogramm aus dem Speicher in den Prozessor geladen ist.

13. Steuervorrichtung nach Anspruch 12, wobei das Computerprogramm Programmcodemittel umfasst, um alle Schritte des Verfahrens durchzuführen, wenn das Computerprogramm auf einem Computer oder einer der angegebenen Vorrichtungen ausgeführt wird.

14. Computerprogrammprodukt, umfassend einen Programmcode, der auf einem computerlesbaren Datenträger gespeichert ist und der, wenn er auf einer Datenverarbeitungseinrichtung mit Empfänger für Satellitennavigation ausgeführt wird, ein Verfahren nach einem der Ansprüche 1 bis 11 durchführt.

## Claims

1. Method for error and integrity evaluation during a position determination, comprising:
- recording position values (P_{-N}, P₋₂, P₋₁) and calculating clock errors of a receiver by time-discrete propagation time measurements by means of a satellite navigation system,
- recording a first pseudo-distance at a later time by time-discrete propagation time measurement by means of the satellite navigation system,
- extrapolating a position value (P'₀) of the receiver at the later time on the basis of a trajectory reflecting the preceding motion path of the receiver, and extrapolating a clock error of the receiver at the later time on the basis of a number of clock errors calculated before the later time,
- ascertaining a distance (r'₀) between the extrapolated position value (P'₀)of the receiver and the position of a satellite (S₀) of the satellite navigation system at the later time,
wherein a quality measure of the usability of the position determination with the satellite is obtained by
- forming a second pseudo-distance on the basis of the sum of the ascertained distance (r'₀) and the extrapolated clock error at the later time, and
- comparing the second pseudo-distance with the first pseudo-distance.

2. Method according to Claim 1, **characterized in that** the trajectory is formed by a number of the position values (P_{-N}, P₋₂, P₋₁) recorded before the later time and/or is extracted from data from environment capturing sensors, in particular camera, radar and/or lidar.

3. Method according to either of the preceding claims, **characterized in that** the later time corresponds to a present time and the process of recording position values (P_{-N}, P₋₂, P₋₁) and calculating clock errors of the receiver, in relation thereto, was carried out at past, in particular uniformly spaced, times.

4. Method according to any of the preceding claims, **characterized in that** for extrapolating the position value (P'₀) of the receiver at the later time, a position value difference (u'₀) is derived from the position value differences (u₋₁, u₋₂) of the previously recorded position values (P_{-N}, P₋₂, P₋₁).

5. Method according to any of the preceding claims, **characterized in that** extrapolating the position value (P'₀) of the receiver is additionally based on an inertia modelling, measurements of an inertial sensor system, measurements of an odometry sensor system, and/or Doppler measurements of the satellite navigation.

6. Method according to any of the preceding claims, **characterized in that** extrapolating the clock error of the receiver is additionally based on temperature measurements, stored information about a clock drift and/or about the clock quartz crystal.

7. Method according to any of the preceding claims, **characterized in that** extrapolating the clock error of the receiver is effected in the form of a distance value which is equivalent to the clock error.

8. Method according to any of the preceding claims, **characterized in that** when ascertaining the distance (r'₀) between the extrapolated position value (P'₀) of the receiver and the position of the satellite (S₀), the position (S₀) of the satellite is ascertained from the ephemeris data thereof, which are transmitted with the satellite signal.

9. Method according to any of the preceding claims, **characterized in that** comparing the second pseudo-distance with the first pseudo-distance comprises a difference formation.

10. Method according to Claim 9, **characterized in that**, relative to a reference value, a small difference amount is assigned a high quality measure and a large difference amount is assigned a low quality measure, and a corresponding quality measure is defined.

11. Method according to either of Claims 9 and 10, **characterized in that** a check for indirectly received signals is carried out, wherein a rapid change in the quality measure relative to a reference value is assessed as an indication for an indirect signal reception.

12. Control device, comprising a receiver for satellite navigation, a memory and a processor, wherein a method according to any of the preceding claims is stored in the form of a computer program in the memory, and the processor is designed to execute the method when the computer program is loaded from the memory into the processor.

13. Control device according to Claim 12, wherein the computer program comprises program code means in order to carry out all the steps of the method when the computer program is executed on a computer or one of the specified devices.

14. Computer program product, comprising a program code which is stored on a computer-readable data carrier and which, when it is executed on a data processing unit with receiver for satellite navigation, carries out a method according to any of Claims 1 to 11.

## Revendications

1. Procédé d'évaluation de défaut et d'intégrité lors d'une détermination de position, comprenant :
- la réception de valeurs de position (P_{-N}, P₋₂, P₋₁) et le calcul de défauts d'horloge d'un récepteur par des mesures de temps de propagation discrètes dans le temps au moyen d'un système de navigation par satellite,
- la réception d'une première pseudo-distance à un instant ultérieur par mesure de temps de propagation discrète dans le temps au moyen du système de navigation par satellite,
- l'extrapolation d'une valeur de position (P'₀) du récepteur à l'instant ultérieur sur la base d'une trajectoire qui restitue le trajet de déplacement antérieur du récepteur et l'extrapolation d'un défaut d'horloge du récepteur à l'instant ultérieur sur la base d'un nombre des défauts d'horloge calculés avant l'instant ultérieur,
- la détermination d'une distance (r'₀) entre la valeur de position extrapolée (P'₀) du récepteur et la position d'un satellite (S₀) du système de navigation par satellite à l'instant ultérieur,
une mesure de qualité pour l'utilité de la détermination de position étant obtenue à l'aide du satellite par
- l'établissement d'une deuxième pseudo-distance sur la base de la somme de la distance déterminée (r'₀) et du défaut d'horloge extrapolé à l'instant ultérieur et
- la comparaison de la deuxième pseudo-distance à la première pseudo-distance.

2. Procédé selon la revendication 1, **caractérisé en ce que** la trajectoire est formée par un nombre des valeurs de position (P_{-N}, P₋₂, P₋₁) acquises avant l'instant ultérieur et/ou est extraite de données de capteurs de détection d'environnement, notamment de caméra, radar et/ou lidar.

3. Procédé selon l'une des revendications précédentes, **caractérisé en ce que** l'instant ultérieur correspond à un instant actuel et **en ce que** la réception de valeurs de position (P_{-N}, P₋₂, P₋₁) et le calcul de défauts d'horloge du récepteur ont en revanche été effectués à des instants passés, notamment régulièrement espacés.

4. Procédé selon l'une des revendications précédentes, **caractérisé en ce que** pour l'extrapolation de la valeur de position (P'₀) du récepteur à l'instant ultérieur, une différence de valeur de position (u'₀) est déduite des différences de valeur de position (u₋₁, u₋₂) des valeurs de position (P_{-N}, P₋₂, P₋₁) acquises précédemment.

5. Procédé selon l'une des revendications précédentes, **caractérisé en ce que** l'extrapolation de la valeur de position (P'₀) du récepteur est en outre basée sur une modélisation d'inertie, des mesures de capteurs inertiels, des mesures de capteurs d'odométrie, et/ou des mesures Doppler de la navigation par satellite.

6. Procédé selon l'une des revendications précédentes, **caractérisé en ce que** l'extrapolation du défaut d'horloge du récepteur est en outre basée sur des mesures de température, des informations mémorisées concernant une dérive d'horloge et/ou le quartz d'horloge.

7. Procédé selon l'une des revendications précédentes, **caractérisé en ce que** l'extrapolation du défaut d'horloge du récepteur est effectuée sous la forme d'une valeur de distance qui est équivalente au défaut d'horloge.

8. Procédé selon l'une des revendications précédentes, **caractérisé en ce que**, lors de la détermination de la distance (r'₀) entre la valeur de position extrapolée (P'₀) du récepteur et la position du satellite (S₀), la position (S₀) du satellite est déterminée à partir de ses données d'éphémérides qui sont transmises avec le signal de satellite.

9. Procédé selon l'une des revendications précédentes, **caractérisé en ce que** la comparaison de la deuxième pseudo-distance à la première pseudo-distance comprend l'établissement d'une différence.

10. Procédé selon la revendication 9, **caractérisé en ce que**, relativement à une valeur de référence, une mesure de qualité élevée est affectée à une petite valeur de différence et une faible mesure de qualité est affectée à une valeur de différence élevée, et une mesure de qualité correspondante est établie.

11. Procédé selon l'une des revendications 9 ou 10, **caractérisé en ce qu'**une vérification des signaux reçus indirectement est effectuée, une modification rapide de la mesure de qualité par rapport à une valeur de référence étant considérée comme un indice de réception indirecte du signal.

12. Dispositif de commande, comprenant un récepteur pour navigation par satellite, une mémoire et un processeur, un procédé selon l'une des revendications précédentes étant mémorisé dans la mémoire sous la forme d'un programme informatique et le processeur étant configuré pour mettre en œuvre le procédé lorsque le programme informatique est chargé depuis la mémoire dans le processeur.

13. Dispositif de commande selon la revendication 12, dans lequel le programme informatique comprend des moyens à code de programme destinés à mettre en œuvre toutes les étapes du procédé lorsque le programme informatique est exécuté sur un ordinateur ou sur l'un des dispositifs indiqués.

14. Produit de programme informatique, comprenant un code de programme qui est mémorisé sur un support de données lisible par ordinateur et qui, lorsqu'il est exécuté sur un dispositif de traitement de données comprenant récepteur pour navigation par satellite, met en œuvre un procédé selon l'une des revendications 1 à 11.
